# EUROPÄISCHE PATENTSCHRIFT

(11) **EP 2 346 111 B1**
(45) Veröffentlichungstag und Bekanntmachung des Hinweises auf die Patenterteilung: **16.07.2014**
(21) Anmeldenummer: 10193908.0
(22) Anmeldetag: 07.12.2010
(51) Int. Cl.: H01M 10/613, H01M 10/654, H01M 10/6553, H01M 10/6569, H01M 10/659, H01M 10/42, H01M 10/0525, F25D 5/00, H01M 2/16

(54) **Elektrochemischer Energiespeicher, insbesondere Lithium-Ionen-Energiespeicher**
Electrochemical energy storage device, in particular lithium-ion energy storage device
Accumulateur d'énergie électrochimique, notamment accumulateur d'énergie lithium-ion

(30) Priorität: 07.01.2010 DE 102010004110
(43) Veröffentlichungstag der Anmeldung: 20.07.2011
(73) Patentinhaber: Siemens Aktiengesellschaft, 80333 München (DE)
(72) Erfinder: Hahn, Alexander, 91341, Röttenbach (DE); Huber, Norbert, 91052, Erlangen (DE); Landes, Harald, 90607, Rückersdorf (DE); Schäfer, Jochen, 90402, Nürnberg (DE); Weydanz, Wolfgang, 91054, Buckenhof (DE); Meinert, Michael, 91056, Erlangen (DE); Rechenberg, Karsten, 91077, Dormitz (DE)

(56) Entgegenhaltungen:
- EP-A1- 2 111 914
- EP-A1- 2 398 108
- EP-A2- 2 416 438
- WO-A1-02/088608
- JP-A- 63 146 978
- JP-A- 2000 323 187
- JP-A- 2003 031 187
- US-A- 5 184 470
- US-A1- 2005 104 554
- US-A1- 2008 241 655

## Beschreibung

### Elektrochemischer Energiespeicher, insbesondere Lithium-Ionen-Energiespeicher

Die Erfindung betrifft ein Modul, umfassend mehrere elektrochemische Energiespeicher, insbesondere Lithium-Ionen-Energiespeicher, mit wenigstens einer in einem Zellgehäuse angeordneten elektrochemischen Zelle.

Energiespeicher in Form von Lithium-Ionen-Zellen sind dem Fachmann in Verwendung und Aufbau bekannt und werden in einer Vielzahl an Anwendungen wie z. B. Handys, Notebooks aber auch in modernen elektrisch betriebenen Kraftfahrzeugen zu deren Stromversorgung verbaut. Diese umfassen im Allgemeinen eine elektrochemische Zelle bestehend aus einer Anode, beispielsweise aus Graphitschichten, zwischen welche Lithium-Ionen interkalieren können und einer auf einer Lithium-Verbindung basierenden Kathode, beispielsweise aus LiCoO₂, in einem Elektrolyten, insbesondere mit einem Lithium-Salz. Beim Laden eines solchen Energiespeichers werden Lithium-Ionen durch den Elektrolyten von der Kathode zur Anode, das heißt zwischen die Graphitschichten, bewegt. Der zum Laden verwendete Strom liefert hierzu die erforderlichen Elektronen. Beim Entladen des Energiespeichers findet eine entsprechende Rückwanderung der Lithium-Ionen statt, die Elektronen bewegen sich über einen äußeren Stromkreis zur Anode.

Dabei geht der Trend solcher Energiespeicher zu immer größeren Einzelzellen. Daneben werden Einzelzellen zu Modulen verbunden, wobei mit steigender Größe der Zellen und so auch der Module mehr Wert auf Sicherheit gelegt werden muss. Insbesondere ein Aufheizen der Zellen über eine mit dem sogenannten "thermal runaway" bezeichnete Temperatur sollte unbedingt vermieden werden, da es durch ein Überhitzen des Energiespeichers über diesen Punkt zu schwerwiegenden Schäden am Modul sowie dessen Anwendung kommen kann.

Aus dem Stand der Technik sind diesbezüglich verschiedene Methoden bekannt, die Sicherheit solcher Energiespeicher durch die Verwendung aktiver sowie passiver Kühlmittel zu erhöhen. Hierzu zählen beispielsweise die richtige Balancierung der Elektroden in der Zelle gegeneinander, die Zugabe von Additiven, welche die Entflammbarkeit des Elektrolyten erschwert, der Einbau eines sogenannten Shut-Down-Separators, der den Stromfluss durch Verschmelzen des Separators bei einer gegebenen Temperatur z. B. im Bereich von 120 bis 160°C unterbricht, sowie die Integration weiterer Sicherheitselemente im Deckel, wie PTC- oder CID-Elemente, welche gekoppelt mit einer Membran bei Überdruck die Zelle öffnen.

US 2005/0104554 A1 offenbart ebenfalls eine Methode und eine Vorrichtung zur Verbesserung der Sicherheit von elektrochemischen Energiespeichern.

Weiterhin können externe Sicherheitselemente für Einzelzellen und Module vorgesehen sein, worunter ebenfalls den Stromfluss begrenzend oder unterbrechend steuernde PTC-Elemente bzw. Sicherungen oder allgemeine Schutzelektroniken inklusive Temperatursensoren, die den Stromfluss aktiv begrenzen, fallen.

Kritisch ist dabei, dass nur ein Teil der genannten Sicherheitsmittel bei internen Problemen respektive Kurzschlüssen in der Zelle einen wirksamen Schutz bieten. Insbesondere Kurzschlüsse bewirken aufgrund der hohen Energiedichte von Lithium-Ionen-Zellen bei gleichzeitig geringer Wärmekapazität extreme Temperaturanstiege. Beispielhaft ist von einem Temperaturanstieg um ca. 600 K bei einer typischen Lithium-Ionen-Zelle mit einer Energiedichte von 140 Wh/kg und einer Wärmekapazität von 800 J/(K*kg) auszugehen.

Insbesondere für Großenergiespeicher, insbesondere Lithium-Ionen-Zellen im Bereich von mehr als 5 Ah, sind die bekannten Maßnahmen nicht mehr effektiv, da sich solch große Energiespeicher im Falle eines Kurzschlusses inhomogen aufheizen. Es ist dabei davon auszugehen, dass sich bei einem Kurzschluss innere Zellbereiche, insbesondere der Zellkern, stärker aufheizen als äußere Zellbereiche.

Die bekannten Maßnahmen zur Kühlung insbesondere größerer Energiespeicher im Falle eines unkontrollierten Erwärmens sind demnach nicht geeignet, um ausreichenden Schutz vor deren Überhitzung zu bieten.

Der Erfindung liegt daher das Problem zugrunde, ein Modul, umfassend mehrere Energiespeicher, insbesondere Lithium-Ionen-Energiespeicher, mit einer verbesserten Kühlung anzugeben.

Das Problem wird erfindungsgemäß gelöst durch die Merkmale des Anspruchs 1.

Die eingangs genannten konventionellen Kühlmethoden sind demnach bei dem erfindungsgemäßen Modul nicht oder nur nachrangig zu dessen Kühlung vorgesehen. Es zeigte sich, dass eine verbesserte Kühlwirkung durch das wenigstens eine endotherme Reaktion ausführende Mittel erzielbar ist. Vor allen Dingen große Energiespeicher bzw. zu Modulen gekoppelte Energiespeicher können mit dem eine endotherme Reaktion ausführenden Kühlmittel hinreichend stark gekühlt werden, so dass eine Überhitzung solcher Energiespeicher bzw. Module verhindert und somit deren Sicherheit gesteigert werden kann.

Unter einer endothermen Reaktion ist im Allgemeinen eine chemische Reaktion zu verstehen, zu deren Initiierung bzw. Ablaufen Energie (z. B. in Form von Wärme) zugeführt werden muss. Endotherme Vorgänge verbrauchen demnach Energie während der Zeit ihrer Reaktion. Wie bei exothermen Reaktionen erfolgt auch bei endothermen Reaktionen der Ablauf in zwei Schritten. Zunächst muss eine bestimmte Aktivierungsenergie aufgebracht werden, wovon ein Teil nach Ablauf der Reaktion wieder frei wird. Der wesentliche Unterschied zur exothermen Reaktion liegt folglich darin, dass während des Ablaufs der endothermen Reaktion kontinuierlich Energie von außen zugeführt werden muss.

Im Rahmen der Erfindung wird also die durch einen Kurzschluss im Energiespeicher entstehende Wärme dafür verwendet, die endotherme Reaktion zu initiieren und ablaufen zu lassen, wodurch es also nicht zu einer übermäßigen bzw. kritischen Zellerwärmung kommt, da die Wärme durch die endotherme Reaktion teilweise verbraucht wird.

Es ist möglich, mehrere gleichartige Kühlmittel an einem Energiespeicher vorzusehen und so die Kühlwirkung der einzelnen Kühlmittel zu steigern bzw. durch verschiedene Ausführungen der Kühlmittel einen besonders breiten Temperaturbereich einzustellen, in dem eine Kühlung des Energiespeichers erfolgt.

Auf die Ausführung der Kühlmittel im Besonderen wird nachstehend näher eingegangen. Entscheidend ist an dieser Stelle, dass dadurch eine auf den jeweiligen Energiespeicher angepasste Kühlleistung des Kühlmittels erreichbar ist, die ein unerwünschtes Aufheizen und somit eine Beschädigung des Energiespeichers sowie gegebenenfalls weiterer Bauteile ausschließt.

Die endotherme Reaktion ist bevorzugt thermisch oder mechanisch initiierbar. Unter thermisch initiiert ist zu verstehen, dass die Reaktion ab einer bestimmten Temperatur bzw. in einem bestimmten Temperaturbereich abläuft. Bei dieser Temperatur respektive in diesem Temperaturbereich wird eine hinreichend hohe Aktivierungsenergie bereitgestellt, die als Initialzündung der endothermen Reaktion dient. Im Weiteren wird durch das Ablaufen der endothermen Reaktion Energie, das heißt im vorliegenden Fall vornehmlich Wärme, verbraucht, was zu einem Abkühlen des Energiespeichers führt. Bei nachfolgendem Unterschreiten der für das Ablaufen der endothermen Reaktion notwendigen Temperatur (das heißt es steht nicht genügend Energie zur Verfügung, die zum Ablauf der Reaktion notwendig ist) kommt es folglich zum Stillstand der Reaktion. Erwärmt sich das System wieder über die entsprechende Temperatur, beginnt die Reaktion erneut abzulaufen bzw. setzt deren kühlende Wirkung wieder ein. Es kann somit von einem sich selbst regulierenden System ausgegangen werden.

Überdies ist es möglich, die endotherme Reaktion mechanisch zu initiieren. Darunter ist im Allgemeinen zu verstehen, dass die miteinander reagierenden Substanzen zunächst voneinander räumlich getrennt sind und erst durch ein insbesondere mechanisches Zusammenführen der Substanzen die endotherme Reaktion überhaupt ablaufen kann. Hierzu muss das die Substanzen voneinander trennende Mittel, bevorzugt eine Trennvorrichtung, insbesondere eine Kunststofffolie, mechanisch überwunden, also so beschädigt werden, dass die räumliche Trennung der Substanzen nicht mehr gewährleistet ist. Die Substanzen können im Weiteren zusammengeführt bzw. gemischt werden, so dass sie miteinander endotherm reagieren können. Gegebenenfalls ist für das Ablaufen der Reaktion entsprechend den obigen Ausführungen eine gewisse Mindesttemperatur im Sinne einer Aktivierungsenergie erforderlich.

Die Trennvorrichtung kann demnach über einen mechanischen Vorgang geöffnet werden. Darunter ist auch zu verstehen, dass die Trennvorrichtung ihre Trennwirkung z. B. durch ein Aufschmelzen oder Aufreißen verliert und so die miteinander endotherm reagierenden Substanzen zusammenführbar sind. Ganz allgemein ist unter "mechanisch auslösbarer Initiierung" der endothermen Reaktion also zu verstehen, dass die Trennvorrichtung, welcher Art sie auch ausgestaltet ist, über die Änderung eines oder mehrerer äußerer Parameter ihre die miteinander reagierenden Substanzen voneinander trennende Funktion nicht mehr ausübt. Diese können miteinander in Kontakt treten und erst ab diesem Zeitpunkt eine endotherme Reaktion überhaupt ausführen. Vorteilhaft ist dabei, dass die Trennvorrichtung so unterschiedlich ausgeführt sein kann, dass sie erst bei hohen oder schon bei vergleichsweise niedrigen Temperaturen ihre Trennwirkung verliert.

Das Kühlmittel besteht aus mindestens einem wenigstens zwei endotherm miteinander reagierende Substanzen umfassenden thermochemischen Stoffsystem oder einer Mischung aus mehreren solchen thermochemischen Stoffsystemen. Thermochemische Stoffsysteme nehmen durch endotherme chemische Reaktion bei einer bestimmten Temperatur oder in einem bestimmten Temperaturbereich Energie aus der Umgebung auf, die notwendig ist, um die endotherme Reaktion der von dem thermochemischen Stoffsystem umfassten wenigstens zwei miteinander reagierenden Substanzen zu initiieren und im Weiteren fortschreiten zu lassen. Diese Materialien sind als Kühlmedien oder Kältespeicher bekannt und nehmen wie erwähnt durch endotherme Vorgänge Energie aus der Umgebung auf. Gegebenenfalls sind natürlich auch Mischungen mehrerer solcher thermochemischer Stoffsysteme vorteilhaft, da derart ein größerer Temperaturbereich, in dem durch endotherme Reaktion der von dem jeweiligen thermochemischen Stoffsystem umfassten Substanzen der Umgebung Energie, insbesondere Wärme, entzogen wird, abgedeckt wird. Natürlich kann derart auch die Kühlwirkung erhöht werden, da unterschiedliche thermochemische Stoffsysteme entsprechend unterschiedliche Reaktionsenthalpien, das heißt Energieumsätze, aufweisen.

Typische thermochemische Stoffsysteme sind nachfolgend aufgezählt, wobei diese Aufzählung nur als Überblick aufzufassen und keinesfalls abschließend ist. Zu einer bekannten Gruppe thermochemischer Stoffsysteme zählen Silikagel + n H₂O, Zeolith + n H₂O, MgSO₄ + n H₂O, CuSO₄ + n H₂O. Die Kühlwirkung dieser Stoffsysteme beruht auf der Freisetzung von chemisorbiertem Wasser innerhalb eines bestimmten Temperaturbereichs, welcher eine hinreichend hohe Temperatur und somit Energie liefert, um eine endotherme Reaktion zu initiieren sowie weiter ablaufen zu lassen. Für die Erfindung relevante Eigenschaften sind in nachfolgender Tabelle zusammengefasst.

| System | Gleichgewichtstmp. [°C] | Energiedichte (Fest-stoff d. Kühlm.) [Wh/kg] |
|---|---|---|
| Silikagel+n H₂O | 30 ... 100 | 260 |
| Zeolith+n H₂O | 40 ... 200 | 500 ... 900 |
| MgSO₄+7 H₂O | 120 | 460 |
| CuSO₄*H₂O+4 H₂O | 105 | 250 |

Andere thermochemische Stoffsysteme führen eine endotherme Reaktion durch Mischen zweier Substanzen herbei, wobei deren Mischungsenthalpie positiv ist. Hierzu zählen vornehmlich Ammonium- oder Alkalimetallsalze gemischt mit Wasser. Ein bekannter Vertreter ist das Stoffsystem aus NH₄NO₃ und Wasser. Dieses System zeichnet sich durch eine Mischungsenthalpie von ca. 76 Wh/kg bei einer Temperatur von ca. 70°C aus. Diese Gruppe thermochemischer Stoffe hat als besonderen Vorteil ein in sich geschlossenes System, welches in einem vergleichsweise großen Temperaturbereich gezielt mechanisch aktivierbar ist. Hierzu kommt insbesondere die Verwendung der oben erwähnten Trennvorrichtung in Frage, welche zum Initiieren der endothermen Reaktion geöffnet werden kann und so eine Mischung und folglich eine endotherme Reaktion zweier Substanzen zulässt.

Wie erwähnt, ist die obige Aufzählung nicht abschließend, das Kühlmittel kann erfindungsgemäß aus verschiedenen Mischungen thermochemischer Stoffsysteme auch über die vorweg genannten unterschiedlichen Gruppen hinweg bestehen.

Die thermochemischen Stoffsysteme gewährleisten demnach bei einem Fehlerfall eines Energiespeichers, wie z. B. durch einen Kurzschluss, wonach ein Energiespeicher sich typischerweise mit » 1 K/s erwärmt und entsprechend mit einer Leistung von etwa 1,6 kW/kg, bevorzugt ca. 2 kW/kg, gekühlt werden muss, eine sichere Abkühlung. Sonach wird eine Kühlleistung von wenigstens 27 Wh/kg benötigt, um bei einer Kühldauer von ca. 60 Sekunden den Energiespeicher wieder in einen sicheren Zustand zu überführen. Die zur Erwärmung führende Reaktion innerhalb des Energiespeichers wird dabei so stark verlangsamt, dass sie schließlich zum Stillstand kommt, ohne den eingangs erwähnten besonders kritischen "thermal runaway" zu erreichen.

Die Auswahl des thermochemischen Stoffsystems erfolgt bevorzugt so, dass dessen aktiver Temperaturbereich bei ca. 60 bis 180°C, insbesondere bei 100 bis 170°C, liegt und die endotherme Reaktion entsprechend in diesem Temperaturbereich abläuft. Als Grenze wird dabei zum einen der Betriebsbereich des Energiespeichers, der normalerweise ca. 60°C oder sogar 80°C erreicht, angesehen, zum anderen muss die endotherme Reaktion bereits vor Erreichen des kritischen Zustands des Energiespeichers initiiert sein. Natürlich sind auch thermochemische Stoffsysteme mit größeren Temperaturintervallen denkbar.

Die Anordnung des Kühlmittels kann nach dem Stand der Technik in Bereichen innerhalb als auch erfindungsgemäß außerhalb des Zellgehäuses erfolgen. Die Anordnung des Kühlmittels direkt innerhalb des Zellgehäuses hat den Vorteil, dass die Wärme möglichst nahe vom Ort ihrer Entstehung abgezogen wird, woraus sich ergibt, dass die erzielbare Kühlwirkung und somit der erzielbare Sicherheitsgewinn für den Energiespeicher erhöht werden kann. Hierfür sind insbesondere thermochemische Stoffsysteme vorgesehen, welche ihre Kühlwirkung über die Mischung zweier oder gegebenenfalls mehrerer Stoffe entfalten, da diese in hermetisch abgeschlossener Ausführung vorliegen können (vgl. hierzu das aus Kühlpads bekannte Prinzip, wonach die chemisch miteinander reagierenden Substanzen sich in einem umhüllenden, vorzugsweise flexiblen Gehäuse, von ihrer Umgebung getrennt befinden. Die flexible Ausführung des Gehäuses bringt dabei Vorteile bezüglich einer Anordnung des Kühlmittels an geometrisch komplex ausgeführten Stellen, wie z. B. Rundungen, mit sich). Die Komponenten des Energiespeichers werden nicht vom Kühlmittel beeinflusst.

Mögliche Orte der Anordnung des Kühlmittels innerhalb des Zellgehäuses sind im Bereich eines Wickeldorns und/oder von elektrischen Kontaktbereichen und/oder von Seitenbereichen der elektrochemischen Zelle. Natürlich sind gegebenenfalls auch sämtliche anderen Anordnungsmöglichkeiten innerhalb des Zellgehäuses denkbar. Im Falle mehrerer zu einem Modul gekoppelter Energiespeicher kann jeder Energiespeicher einzeln mit Kühlmitteln innerhalb seines Zellgehäuses versorgt sein.

Die Anordnung des Kühlmittels außerhalb des Zellgehäuses bedingt eine gute thermische Kopplung des Zellgehäuses bzw. des Energiespeichers mit dem Kühlmittel. Hierfür sind besonders thermochemische Stoffsysteme geeignet, die über Wasserabspaltung endotherm reagieren, da diese Stoffsysteme eine vergleichsweise hohe Energiedichte aufweisen (siehe obige Tabelle), was zur Folge hat, dass Volumen- und Gewichtsbedarf minimiert werden können und das durch die endotherme Reaktion freigesetzte Wasser bzw. der Wasserdampf auf einfache Weise extern abgeführt werden kann.

Mögliche Orte der Anordnung des Kühlmittels außerhalb des Zellgehäuses sind gemäß dem Stand der Technik wenigstens abschnittsweise direkt auf dessen Oberfläche und/oder erfindungsgemäß über eine oder mehrere thermisch leitfähige Strukturen, insbesondere Wärmeleitbleche, mit der Oberfläche des Zellgehäuses thermisch leitend gekoppelt und/oder gemäß dem Stand der Technik innerhalb doppelwandig ausgeführter Bereiche des Zellgehäuses. Entsprechend der zu erzielenden Kühlleistung kann es sonach erforderlich sein, gemäß dem Stand der Technik das Kühlmittel direkt abschnittsweise oder über seine volle Fläche, je nach geometrischer Ausführung, auf der Oberfläche des Zellgehäuses über geeignete Befestigungselemente, welche bevorzugt einen möglichst eng anliegenden Kontakt des Kühlmittels auf der Oberfläche des Zellgehäuses erlauben, anzuordnen. Hierbei sind thermisch leitfähige Kleber denkbar, aber auch rein mechanische Vorrichtungen, die das Kühlmittel so mit dem Zellgehäuse kontaktieren, dass ein Wärmeübertrag stattfinden kann. Beispielhaft sei ein Verklipsen des Kühlmittels an entsprechenden Befestigungsabschnitten des Zellgehäuses angeführt. Die Art der Anbringung muss dabei allen Betriebsbedingungen, wie z. B. Temperatur oder Feuchtigkeit, des Energiespeichers gerecht werden.

Daneben sind erfindungsgemäß wärmeleitfähige Strukturen ergänzend oder alternativ mit der Oberfläche des Zellgehäuses thermisch leitend gekoppelt, was insbesondere im Falle mehrerer zu einem Modul zusammengefasster Energiespeicher zweckdienlich ist, da so ein Wärmeübertrag auch zwischen den einzelnen Energiespeichern möglich ist. Derart ist auch eine örtliche Trennung des Kühlmittels vom Zellgehäuse realisierbar, welches über entsprechende wärmeleitfähige Strukturen mit dem Zellgehäuse verbunden ist. Als thermisch leitfähige Strukturen kommen insbesondere Wärmeleitbleche in Frage, natürlich liegen aber jedwede andersartig ausgeführte thermisch leitfähige Strukturen hinsichtlich Form und Material ebenso im Rahmen der Erfindung. Die Befestigung der thermisch leitfähigen Strukturen ist mechanisch stabil und bevorzugt durch äußere Einflüsse nicht zu lösen. Im Falle doppelwandig ausgeführter Energiespeicher kann es zweckmäßig sein, die Kühlmittel zwischen einem Innengehäuse bzw. einer Innenwandung, das bzw. die den oder die eigentlichen Energiespeicher aufnimmt, und einem Außengehäuse bzw. einer Außenwandung, das bzw. die das Innengehäuse aufnimmt, zu integrieren.

Eine Anordnung des Kühlmittels außerhalb des Zellgehäuses hat einen bedeutenden Einfluss auf die Auswahl des jeweiligen Kühlmittels. Möglicherweise müssen sonach dem Kühlmittel zugeordnete endotherm reagierende Substanzen mit einer geringeren Reaktionstemperatur gewählt bzw. eine größere Menge dieser Substanzen verwendet werden. Die Anordnung des Kühlmittels außerhalb des Zellgehäuses erfordert weiterhin eine gewisse Formstabilität des Kühlmittels, dahingehend, dass sich dieses z. B. im Falle der Reaktion nicht durch eine geometrische Änderung seiner Abmaße, wie z. B. ein Verbiegen, von der Oberfläche des Zellgehäuses oder der thermisch leitfähigen Struktur ablöst.

In einer weiteren Ausführung der Erfindung soll der elektrochemische Energiespeicher zusätzlich mit wenigstens einem Shut-Down-Separator ausgestattet sein. Im Falle mehrerer zu einem Modul zusammengefasster Energiespeicher ist bevorzugt jedem Energiespeicher ein Shut-Down-Separator zugeordnet. Der Shut-Down-Separator ist bevorzugt bereits vor der durch das Kühlmittel bedingten einsetzenden Kühlung aktiv, so dass durch das Kühlmittel ein weiteres Aufheizen der Zelle unterbunden werden kann. Somit ist der Shut-Down-Separator vor einer thermischen Überlastung geschützt. Mit anderen Worten liegt die Aktivierungstemperatur des Shut-Down-Separators unterhalb der Temperatur, bei der die endotherme Reaktion des Kühlmittels abläuft. Größere Energiespeicher können so wirksam mit einem Shut-Down-Separator ausgerüstet werden. Innere Bereiche eines Energiespeichers können im Fehlerfall durch das endotherm reagierende Kühlmittel gekühlt werden, somit bleibt auch der Shut-Down-Separator thermisch stabil. Die Ausführungsmöglichkeiten eines Shut-Down-Separators sind an und für sich bekannt und müssen nicht näher erläutert werden. Es sind alle Arten von Shut-Down-Separatoren grundsätzlich einsetzbar.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Energiespeichers, bzw. einer Energiespeicherzelle
- Fig. 2: eine Prinzipdarstellung mehrerer zu einem Modul gekoppelter Energiespeicher,
- Fig. 3: eine Prinzipdarstellung eines erfindungsgemäßen Energiespeichers in einer alternativen Ausführungsform, und
- Fig. 4: eine schematische Darstellung der Funktionsweise einer Trennvorrichtung.

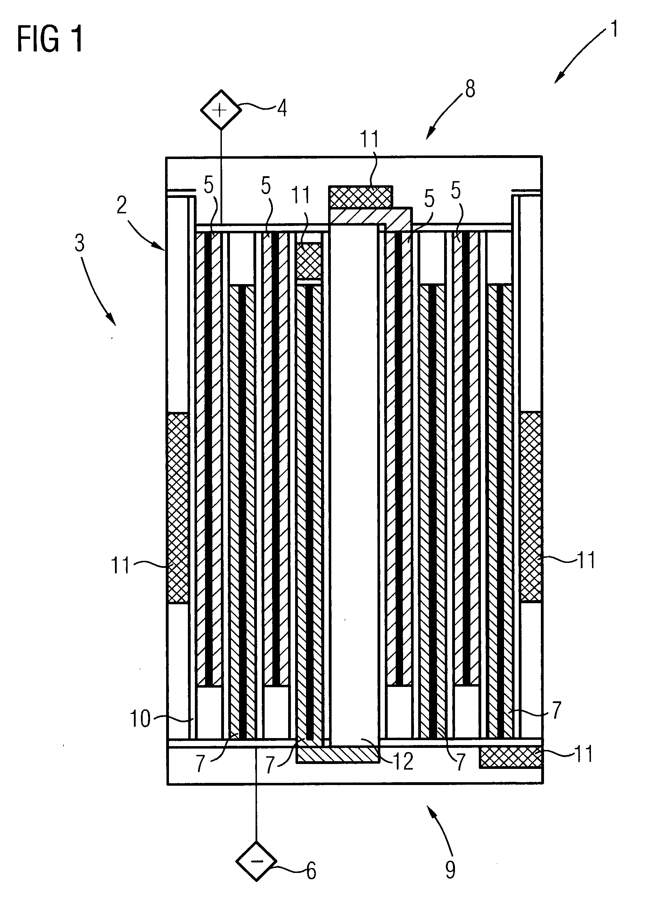

Fig. 1 zeigt eine Prinzipdarstellung eines Energiespeichers 1 in Form eines Lithium-Ionen-Energiespeichers mit einer in einem Zellgehäuse 2 angeordneten elektrochemischen Zelle 3. Die elektrochemische Zelle 3 umfasst mehrere mit einer Kathode 4 verbundene positive Elektroden 5 sowie eine entsprechende Anzahl an mit einer Anode 6 verbundenen negativen Elektrode 7, welche sich in einem wasserfreien z. B. organischen Elektrolyten, mit einem Lithium-Salz wie LiPF₆, befinden. Kathode 4 und Anode 6 sind an oberen Kontaktbereichen 8 (Deckelbereich der Zelle) respektive unteren Kontaktbereichen 9 (Bodenbereich der Zelle) der elektrochemischen Zelle 3 vorgesehen. Separatoren 10 sind je zwischen den positiven und negativen Elektroden 5, 7 angebracht, die dafür sorgen, dass die positiven Elektroden räumlich und elektrisch von den negativen Elektroden getrennt sind. Selbstverständlich sind die Separatoren 10 für den Betrieb des Energiespeichers 1 für Ionen durchlässig. Bekanntermaßen sind gängige Materialien der Separatoren beispielsweise mikroporöse Kunststoffe oder Kunststoff- sowie Glasfaser-Vliese oder keramisch oder mit Glaspartikeln beschichtete Strukturen. Die negativen Elektroden 7 sind beispielsweise aus Graphit, die positiven Elektroden 5 beispielsweise aus LiCoO₂ gebildet.

Die elektrochemische Zelle 3 und somit der Energiespeicher 1 sind vor Schäden, wie sie beispielsweise durch Kurzschlüsse innerhalb der elektrochemischen Zelle 3 auftreten können, mittels eines innerhalb des Zellgehäuses 2 angeordneten, eine thermisch oder mechanisch initiierbare endotherme Reaktion ausführenden Kühlmittels 11 geschützt. Das Kühlmittel 11 besteht aus einem zwei miteinander endotherm reagierende Substanzen umfassenden thermochemischen Stoffsystem. Es handelt sich dabei um ein geschlossenes, hermetisch abgedichtetes und auf einem Ammoniumsalz wie NH₄NO₃ basierendes System, welches durch Mischen mit Wasser aufgrund seiner positiven Mischungsenthalpie eine endotherme Reaktion durchläuft, welche der Umgebung, das heißt hier dem Inneren der elektrochemischen Zelle 3, Energie in Form von Wärme entzieht.

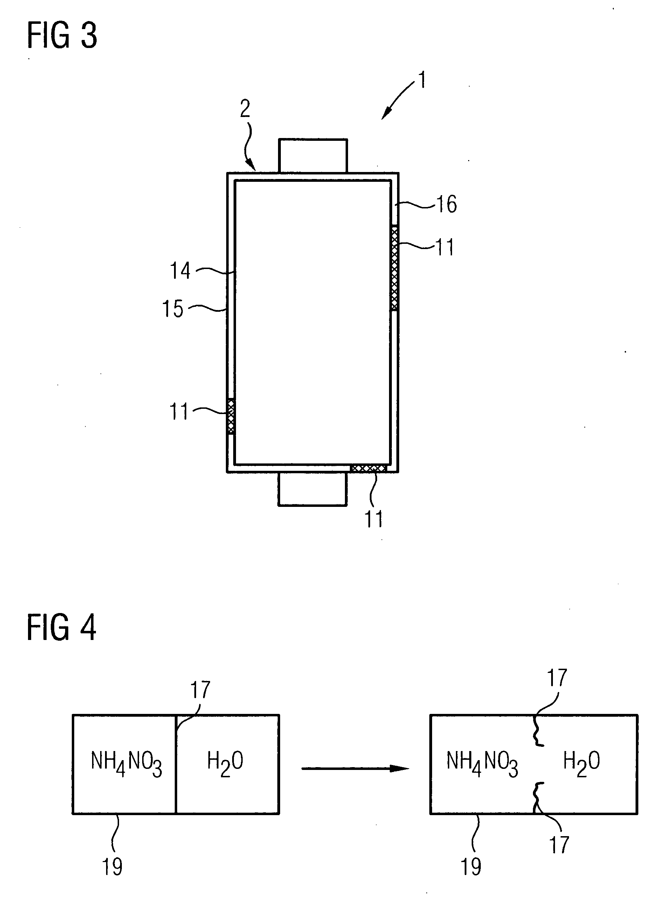

Die beiden miteinander reagierenden von einer Hülle 19 umschlossenen Substanzen, hier NH₄NO₃ und Wasser, sind zunächst mittels einer Trennvorrichtung 17 voneinander getrennt (Fig. 4a, links), so dass eine endotherme Reaktion erst bei einem insbesondere mechanischen Überwinden der Trennvorrichtung 17 (Fig. 4b, rechts) und gegebenenfalls bei einer Mindesttemperatur beginnen und ablaufen kann. Die Trennvorrichtung 17 kann in Form einer geeigneten Kunststofffolie vorliegen, die bei einer bestimmten Temperatur schmilzt oder mechanisch derart beschädigt werden kann, dass eine Mischung der beiden Substanzen erfolgen kann.

Durch das Kühlmittel 11 ist eine verbesserte Kühlung des Energiespeichers 1 möglich, wonach auch bei leistungsbezogen großen Energiespeichern 1 ein hohes Maß an Sicherheit realisierbar ist, wie es bisher nur bei kleinen Energiespeichern 1, wie z. B. in Mobiltelefonen oder Elektrowerkzeugen, bekannt ist.

Das Kühlmittel 11 ist dabei so ausgewählt, dass eine endotherme Reaktion zur Kühlung des Energiespeichers 1 im Fehlerfall bei einer Temperatur von 60 bis 180°C, insbesondere oberhalb von 100°C, beginnt und abläuft. Entsprechend kann die Trennvorrichtung ausgebildet sein, so dass diese ihre Trennwirkung spätestens an dieser Temperaturgrenze definiert verliert und eine Mischung der miteinander endotherm reagierenden Substanzen zulässt.

Die Anordnung des Kühlmittels 11 erfolgt dabei innerhalb der elektrochemischen Zelle 3, wobei besonders die Anordnung in Leerräumen wie z. B. in den Bereichen um den bzw. im Wickeldorn 12 und/oder elektrischen Kontaktbereiche 8, 9 und/oder der Seitenbereiche 13 der elektrochemischen Zelle 3 bevorzugt ist. An diesen Stellen sind entsprechende Leerräume innerhalb des Zellgehäuses 2 vorgesehen, in denen das Kühlmittel 11 platzsparend angeordnet werden kann. Je nach Leistung des Energiespeichers 1 sind also auch mehrere Kühlmittel 11 an verschiedenen Stellen innerhalb des Zellgehäuses 2 anordenbar.

Die wesentlichen Vorteile einer Anordnung des Kühlmittels 11 innerhalb des Zellgehäuses 2 liegen in einem schnellen Ansprechen des Kühlmittels 11 im Falle einer Überhitzung des Energiespeichers 1. Aufgrund der räumlichen Nähe zum Ort der Entstehung der Wärme ergibt sich eine effiziente Kühlung des Energiespeichers 1, weshalb bei dieser Variante der Anordnung vergleichsweise wenig Kühlmittel 11 verwendet werden muss.

Ebenso kann ein an sich bekannter Shut-Down-Separator 16 vorgesehen sein, der den Stromfluss zwischen den Elektroden 5, 7 im Fehlerfall, das heißt bei einer unkontrollierten Erwärmung des Energiespeichers 1, durch Schmelzen hemmt bzw. stoppt. Die Aktivierungstemperatur des Shut-Down-Separators 16 liegt dabei unterhalb der Temperatur, bei der die endotherme Reaktion des Kühlmittels 11 abläuft. Wie erwähnt, ist der Temperaturbereich des Kühlmittels 11 so eingestellt, dass der Shut-Down-Separator 16 bereits aktiviert ist und die folgende Kühlung durch das Kühlmittel 11 ein Aufheizen bzw. weiteres Aufheizen des Energiespeichers 1 stoppt. Der Shut-Down-Separator 16 ist so vor thermischer Überlastung geschützt.

Durch die Erfindung wird ein effizienter Schutz gegen den sogenannten "thermal runaway" elektrochemischer Energiespeicher 1, insbesondere für große Anwendungen solcher Energiespeicher 1, bereitgestellt, um somit Schäden am Energiespeicher 1 selbst sowie dessen jeweiliger Anwendung zu verhindern.

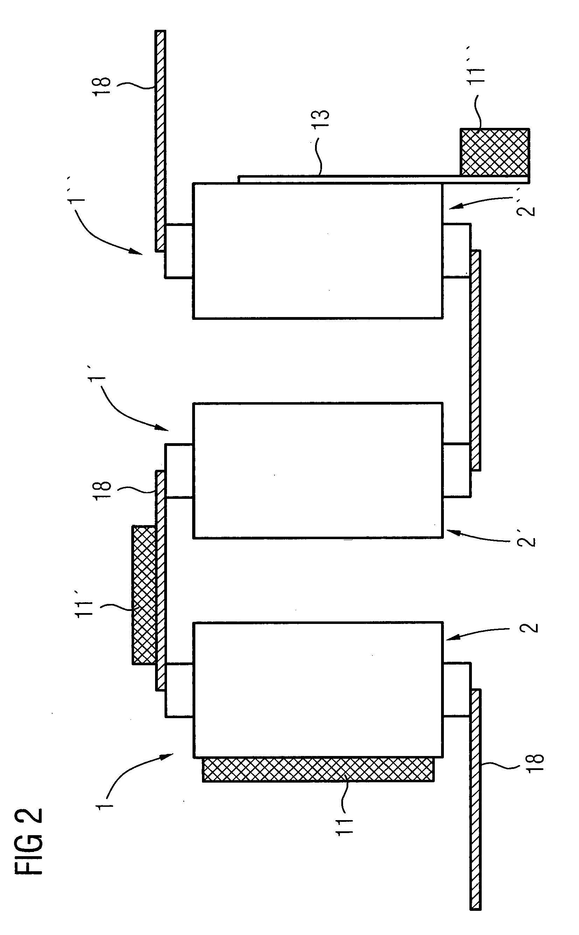

Fig. 2 zeigt eine Prinzipdarstellung mehrerer zu einem Modul gekoppelter Energiespeicher 1, 1', 1" . Lediglich beispielhaft sind hier drei gekoppelte Energiespeicher 1, 1', 1" gezeigt, wobei die nachfolgende Beschreibung selbstverständlich auch auf eine größere Anzahl oder gegebenenfalls nur zwei gekoppelte Energiespeicher 1, 1' übertragbar ist. Die einzelnen Energiespeicher 1, 1', 1" sind nicht näher dargestellt, da es hierbei vornehmlich darum geht, verschiedene mögliche Anordnungen des Kühlmittels 11, 11', 11" außerhalb der Zellgehäuse 2, 2', 2" der Energiespeicher 1, 1', 1" darzustellen.

Es ist ersichtlich möglich, ein Kühlmittel 11 wenigstens abschnittsweise direkt auf der Oberfläche eines Energiespeichers 1 anzuordnen und/oder ein Kühlmittel 11', 11" über eine oder mehrere thermisch leitfähige Strukturen 13, insbesondere Wärmeleitbleche, mit der Oberfläche des Zellgehäuses 2" thermisch leitend zu verbinden. Das Kühlmittel 11' kann erfindungsgemäß auch auf Verbindungsleitern 18 zwischen den Energiespeichern 1, 1' angeordnet sein, wobei das Kühlmittel 11' zumindest abschnittsweise auf den Verbindungsleitern 18 angeordnet ist. Überdies ist es erfindungsgemäß denkbar, ein Kühlmittel 11" räumlich getrennt von einem Energiespeicher 1" anzubringen und es über eine thermisch leitfähige Struktur 13 mit diesem zu koppeln.

Bei der Anordnung des oder der Kühlmittel 11, 11', 11" außerhalb des Zellgehäuses 2, 2', 2" sind bevorzugt Kühlmittel 11, 11', 11" einzusetzen, welche mittels einer Wasserabspaltung endotherm reagieren, da diese thermochemischen Stoffe eine sehr hohe Energiedichte aufweisen. Der Volumen- und Gewichtsbedarf wird derart minimiert und die Reaktionsprodukte Wasser bzw. Wasserdampf können einfach extern abgeführt werden. Ein insofern in Frage kommendes Kühlmittel 11, 11', 11" wäre z. B. Silikagel + n H₂O.

Eine weitere nicht erfindungsgemäße Variante der Anordnung eines Kühlmittels 11 außerhalb des Zellgehäuses 2 ist in Fig. 3 gezeigt, welche eine Prinzipdarstellung eines Energiespeichers 1 mit einem doppelwandig ausgeführten Zellgehäuse 2 aufweisend eine Innenwandung 14 und eine Außenwandung 15 darstellt. Hier besteht die Möglichkeit, das Kühlmittel 11 innerhalb des sich zwischen Innenwandung 14 und Außenwandung 15 erstreckenden Spaltraums 16 anzuordnen. In Fig. 3 sind beispielhaft drei mögliche Anordnungen des Kühlmittels 11 gezeigt. Natürlich sind grundsätzlich auch andere Anordnungen bzw. mehr oder weniger Kühlmittel 11 verwendbar.

Die in den Figuren 2 und 3 gezeigten möglichen Anordnungen des Kühlmittels 11 außerhalb des bzw. der Zellgehäuse, 2, 2', 2" sind als sich gegebenenfalls auch ergänzende Alternativen zu erachten.

Natürlich ist es auch denkbar, Kühlmittel 11 sowohl innerhalb als auch außerhalb eines Zellgehäuses 2 oder im Falle eines Energiespeicher-Moduls außerhalb und innerhalb mehrerer Zellgehäuse 2, 2', 2" anzuordnen, was einen zusätzlichen Schutz für den Energiespeicher 1 bzw. das Energiespeicher-Modul bedeutet.

Wesentliche Vorteile der Anordnung des Kühlmittels 11 außerhalb des Zellgehäuses sind darin zu sehen, dass nach Aktivieren des Kühlmittels 11, das heißt nach Initiierung und Fortlaufen der endothermen Reaktion des thermochemischen Stoffsystems, der Energiespeicher 1 nicht notwendigerweise beschädigt wird und somit gegebenenfalls weiter verwendbar ist. Ferner ist es möglich, das oder die Kühlmittel 11 einfach auszutauschen bzw. leicht nachzurüsten, was insbesondere für handelsübliche Energiespeicher 1 ohne Änderung ihres ursprünglichen Aufbaus realisierbar ist und einen großen Nutzen verspricht.

Bezüglich der Anordnung des Kühlmittels 11 außerhalb des Zellgehäuses 2 ist der zeitliche Versatz der Erwärmung innerhalb des Energiespeichers 1, das heißt die Zeit, bis die im Inneren des Energiespeichers 1 im Fehlerfall entstandene Wärme bis zu den äußeren Bereichen gelangt und das Kühlmittel 11 erreicht, zu beachten. Das Kühlmittel 11 muss demnach möglicherweise eine geringere Reaktionstemperatur als die des thermochemischen Stoffsystems aufweisen, welche zur Initiierung der endothermen Reaktion erforderlich ist. Daneben kann es notwendig sein, insgesamt größere Mengen an Kühlmittel 11 einzusetzen.

Insgesamt ist das erfindungsgemäße Modul insbesondere für die Verwendung in Traktionsanwendungen oder in großen stationären Systemen geeignet, da es gerade hier wichtig ist, die einzelnen Energiespeicher 1 vor einem "thermal runaway" zu schützen und so Folgeschäden auch am Gesamtmodul auszuschließen, was ein zusätzliches Maß an Sicherheit bedeutet.

## Patentansprüche

1. Modul, umfassend mehrere elektrochemische Energiespeicher (1, 1', 1''), insbesondere Lithium-Ionen-Energiespeicher, mit wenigstens einer in einem Zellgehäuse (2, 2', 2'') angeordneten elektrochemischen Zelle, wobei wenigstens ein eine endotherme Reaktion ausführendes Kühlmittel (11, 11', 11'') vorgesehen ist, wobei das Kühlmittel (11, 11', 11'') aus mindestens einem wenigstens zwei endotherm miteinander reagierende Substanzen umfassenden thermochemischen Stoffsystem oder einer Mischung aus mehreren solchen thermochemischen Stoffsystemen besteht, wobei das Kühlmittel (11, 11', 11'') außerhalb des Zellgehäuses (2, 2', 2'') der jeweiligen Energiespeicher (1, 1', 1'') angeordnet ist, **dadurch gekennzeichnet, dass** das Kühlmittel (11, 11', 11'') über eine oder mehrere als Wärmeleitbleche ausgebildete thermisch leitfähige Strukturen (13) mit der Oberfläche des Zellgehäuses (2, 2', 2'') thermisch leitend gekoppelt ist und/oder zumindest abschnittsweise auf zwischen den Energiespeichern (1, 1', 1'') angeordneten Verbindungsleitern (18) angeordnet ist, wobei die miteinander reagierenden Substanzen voneinander über eine zum Initiieren der endothermen Reaktion öffenbare Trennvorrichtung (17), insbesondere eine Kunststofffolie, separiert sind.

2. Modul nach Anspruch 1 **dadurch gekennzeichnet, dass** die endotherme Reaktion thermisch oder mechanisch initiierbar ist.

3. Modul nach Anspruch 1 oder 2 **dadurch gekennzeichnet, dass** das thermochemische Stoffsystem Silikagel + n H₂O, Zeolith + n H₂O, MgSO₄ + n H₂O, CuSO₄H₂O + n H₂O oder NH₄NO₃ + n H₂O ist.

4. Modul nach einem der vorangehenden Ansprüche **dadurch gekennzeichnet, dass** ein Shut-Down-Separator (16) vorgesehen ist.

5. Modul nach Anspruch 4 **dadurch gekennzeichnet, dass** die Aktivierungstemperatur des Shut-Down-Separators (16) unterhalb der Temperatur, bei der die endotherme Reaktion abläuft, liegt.

## Claims

1. Module comprising a plurality of electrochemical energy stores (1, 1', 1''), in particular lithium-ion energy stores, having at least one electrochemical cell arranged in a cell housing (2, 2', 2''), wherein at least one coolant (11, 11', 11'') which reacts endothermically is provided, wherein the coolant (11, 11', 11'') is composed of at least one thermochemical material system comprising at least two substances which react endothermically with one another, or of a mixture of a plurality of such thermochemical material systems, wherein the coolant (11, 11', 11'') is arranged outside the cell housing (2, 2' , 2'') of the respective energy stores (1, 1', 1''), **characterized in that** the coolant (11, 11', 11'') is coupled in a thermally conductive fashion to the surface of the cell housing (2, 2', 2'') via one or more thermally conductive structures (13) embodied as heat-conducting sheet-metal plates and/or is arranged at least in certain sections on connecting conductors (18) arranged between the energy stores (1, 1', 1''), wherein the substances which react with one another are separated from one another by means of a separating device (17), in particular a plastic film, which can be opened in order to initiate the endothermic reaction.

2. Module according to Claim 1, **characterized in that** the endothermic reaction can be initiated thermally or mechanically.

3. Module according to Claim 1 or 2, **characterized in that** the thermochemical material system is silica gel + n H₂O, zeolith + n H₂O, MgSO₄ + n H₂O, CuSO₄H₂O + n H₂O or NH₄NO₃ + n H₂O.

4. Module according to one of the preceding claims, **characterized in that** a shut-down separator (16) is provided.

5. Module according to Claim 4, **characterized in that** the activation temperature of the shut-down separator (16) is below the temperature at which the endothermic reaction takes place.

## Revendications

1. Module, comprenant plusieurs accumulateurs ( 1, 1', 1'' ) d'énergie électrochimiques, notamment des accumulateurs d'énergie à ions lithium, ayant au moins un élément électrochimique disposé dans un boîtier ( 2, 2', 2'' ), au moins un moyen ( 11, 11', 11'' ) de refroidissement, réalisant une réaction endothermique étant prévue, le moyen ( 11, 11', 11'' ) de refroidissement étant constitué d'au moins un système de matière thermochimique comprenant au moins deux substances réagissant endothermiquement l'une sur l'autre ou d'un mélange de plusieurs systèmes de matière thermochimique de ce genre, le moyen ( 11, 11', 11'' ) de refroidissement étant disposé à l'extérieur du boîtier ( 2, 2', 2'' ) de l'accumulateur ( 1, 1', 1'' ) d'énergie respectif, **caractérisé en ce que** le moyen ( 11, 11', 11'' ) de refroidissement est, par une ou par plusieurs structures ( 13 ) conductrices thermiquement, constitué sous la forme de plusieurs tôles conductrices de la chaleur, couplé d'une manière conductrice thermiquement à la surface du boîtier ( 2, 2', 2'' ) et/ou disposé au moins par endroits sur des conducteurs ( 18 ) de liaison disposés entre les accumulateurs ( 1, 1', 1'') d'énergie, les substances réagissant l'une sur l'autre étant séparées l'une de l'autre par un dispositif ( 17 ) de séparation, notamment par une feuille en matière plastique, pouvant s'ouvrir pour amorcer la réaction endothermique.

2. Module suivant la revendication 1, **caractérisé en ce que** la réaction endothermique peut être amorcée thermiquement ou mécaniquement.

3. Module suivant la revendication 1 ou 2, **caractérisé en ce que** le système de matière thermochimique est du gel de silice + n H₂O, zéolithe + n H₂O, MgSO₄ + n H₂O, CuSO₄H₂O + n H₂O ou NH₄NO₃ + n H₂O.

4. Module suivant l'une des revendications précédentes, **caractérisé en ce qu'**il est prévu un séparateur ( 16 ) shut-down.

5. Module suivant la revendication 4, **caractérisé en ce que** la température d'activation du séparateur ( 16 ) shut-down est inférieure à la température à laquelle se déroule la réaction endothermique.
